# EUROPÄISCHE PATENTSCHRIFT

(11) **EP 0 607 171 B1**
(45) Veröffentlichungstag und Bekanntmachung des Hinweises auf die Patenterteilung: **11.12.1996**
(21) Anmeldenummer: 92919255.7
(22) Anmeldetag: 12.09.1992
(51) Int. Cl.: B60T 8/50, B60T 8/36

(54) **BLOCKIERGESCHÜTZTE HYDRAULISCHE BREMSANLAGE**
ANTI-BLOCKING HYDRAULIC BRAKE SYSTEM
SYSTEME DE FREINAGE HYDRAULIQUE ANTIBLOCAGE

(30) Priorität: 18.10.1991 DE 4134493
(43) Veröffentlichungstag der Anmeldung: 27.07.1994
(73) Patentinhaber: ITT Automotive Europe GmbH, 60488 Frankfurt am Main (DE)
(72) Erfinder: ZAVISKA, Dalibor, D-6000 Frankfurt am Main 80 (DE)
(86) Internationale Anmeldenummer: EP9202097
(87) Internationale Veröffentlichungsnummer: WO9308055

(56) Entgegenhaltungen:
- EP-A- 0 267 162
- DE-A- 2 021 185
- DE-A- 2 262 247
- DE-A- 4 002 865
- GB-A- 2 210 944
- US-A- 3 856 047
- US-A- 3 977 649

## Beschreibung

Die Erfindung bezieht sich auf eine blockiergeschützte hydraulische Bremsanlage nach dem Oberbegriff des Anspruch 1. Aus der GB 2210944 A ist eine blockiergeschützte Bremsanlage bekannt, bei der der Radbremse Druckmittel über eine Drossel zugeführt wird. Zur Verringerung des Radbremsdruckes ist ein Auslaßventil vorgesehen, daß die Radbremsen mit einen Vorratsbehälter verbindet. Bei dem Auslaßventil handelt es sich um ein elektromagnetisch betätigbares Schließventil, das entweder geöffnet oder geschlossen ist. Um einen definierten Druckabbau zu erhalten, wird das Auslaßventil getaktet angesteuert.

Aus der US-A-3856047 ist eine Bremsanlage bekannt bei der ebenfalls zur Drucksteuerung in Radbremsen ein Ein- und Auslaßventil vorgesehen ist. Ein Auslaßventil wird durch einen gemeinsamen Steuerkolben betätigt, der über ein Druckgefälle an seinen Stirnseiten verschoben wird. Ein definiertes Druckgefälle wird eingestellt, indem eine Kammer, die von der einen Stirnseite des Steuerkolbens begrenzt wird, über eine Drossel, deren Querschnitt über einen Stellmagneten veränderbar ist, mit einem Vorratsbehälter verbunden wird.

Aus der DE-OS 20 21 185 ist eine blockiergeschützte Bremsanlage bekannt, bei der als Bremsdruckgeber ein Druckmittelspeicher mit nachgeschaltetem pedalbetätigtem Regelventil vorgesehen ist. Mit Hilfe dieses Ventils wird in den Bremskreis ein fußkraftproportionaler Druck eingesteuert.

Dem Regelventil ist ein weiteres Regelventil nachgeschaltet, das von einem Proportionalmagneten betätigt wird. Das Regelventil ist als 3/2-Wegeventil ausgebildet, d.h. in der einen Position sind die Radbremsen mit dem pedalbetätigten Ventil, in der anderen Position mit einem Vorratsbehälter verbunden. Mit Hilfe des Proportionalmagneten kann nun entsprechend der vom Proportionalmagneten aufgebrachten Kraft ein Druck in der Radbremse eingestellt werden. Die Steuerung des Proportionalmagneten erfolgt schlupfabhängig, so daß am Rad ein optimaler Schlupf eingestellt wird.

Die Ausbildung des 3/2-Wegeventils ist aber, um eine hohe Regelgüte zu erzielen, nicht optimal. Um nämlich eine Druckhaltephase zu gewährleisten, müssen beide Anschlüsse sperrbar sein. Dazu ist ein gewisser Totweg des Ventilkörpers vorzusehen, bei dem beide Anschlüsse gesperrt sind.

In den Fällen, in denen ein rascher Wechsel zwischen Druckauf- und Druckabbau notwendig ist, ist dieser Totweg hinderlich, da er eine gewisse Zeitverzögerung bewirkt.

Die Erfindung beruht daher auf der Aufgabe, eine Ventilkonfiguration zu schaffen, die eine hohe Regelgüte bei gleichzeitig einfachem Aufbau gewährleistet.

Die Aufgabe wird mit den Mitteln gelöst, die im Hauptanspruch genannt sind.

Als Einlaßventil ist eine Drossel oder ein Stromregelventil vorgesehen, während lediglich das Auslaßventil proportional gesteuert wird.

Mit Hilfe des Proportionalmagneten kann nun unmittelbar der gewünschte Bremsdruck in der Radbremse eingestellt werden. Das über die Drossel bzw. das Stromregelventil nachfließende Druckmittel wird vollständig oder nur zum Teil über das Druckbegrenzungsventil abgeleitet. Damit kann entweder eine Druckhalte- oder eine Druckaufbauphase eingeleitet werden. In einer Druckabbauphase fließt zusätzlich zu dem Druckmittel, das über das Einlaßventil einströmt, Druckmittel aus der Radbremse ab.

Vorteilhafterweise wird die Ansteuerung des Ventils so bewerkstelligt, daß eine Federkraft vorgesehen ist, die das Ventil geschlossen hält. Die Kräfte des Proportionalmagneten wirken nun entgegen der Federkraft, so daß der Öffnungsdruck mit steigender Magnetkraft immer weiter gesenkt wird.

Diese Konzeption kann in verschiedenen Arten von Bremsanlagen eingesetzt werden, dies gilt für geschlossene Systeme, bei denen der Bremsdruckgeber ein Hauptzylinder ist und die Druckmittelquelle eine Pumpe, die an den Hauptzylinder anschließt, und der Druckmittelsammler ein Niederdruckspeicher, aus dem die Pumpe ansaugt. Auch offene Systeme sind möglich, bei denen Druckmittel aus der Radbremse in einen Vorratsbehälter abgelassen wird.

Das System kann auch herangezogen werden bei blockiergeschützten Bremsanlagen, die nach dem Prinzip der Volumenerweiterung arbeiten.

Im folgenden wird anhand mehrerer Figuren die Erfindung beschrieben. Es werden insbesondere eine Vielzahl von möglichen Stromregelventilen dargestellt, die in vorteilhafter Weise mit einem Proportionaldruckbegrenzungsventil als Auslaßventil zusammenarbeiten.

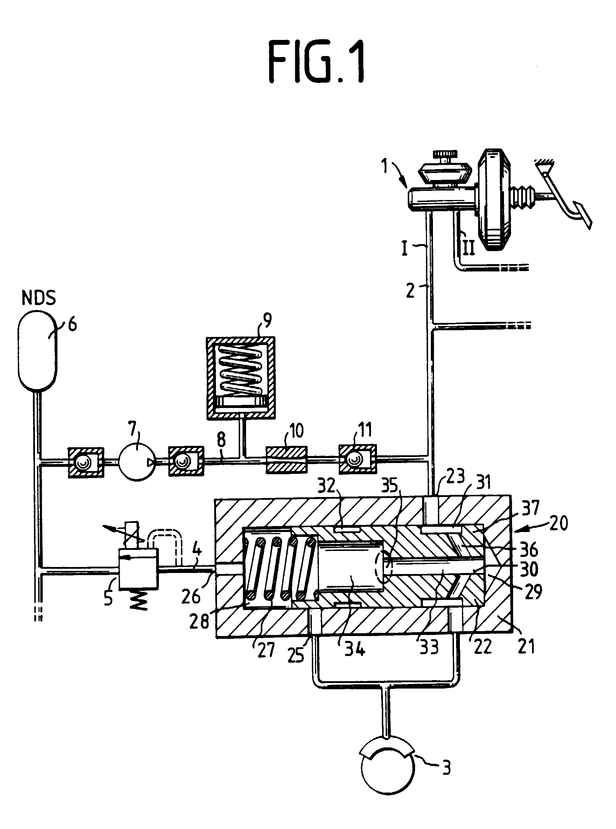

Die in Figur 1 dargestellte Bremsanlage besteht aus einem Hauptzylinder 1, an den zwei Bremskreise I, II angeschlossen sind. Der Hauptzylinder 1 ist von üblicher Bauart und braucht daher nicht näher erläutert zu werden. Die Aufteilung der Radbremsen auf die Bremskreise I, II ist beliebig bzw. entspricht einer der gebräuchlichen Varianten. Daher ist im folgenden nur ein Bremskreis dargestellt, wobei der zweite Bremskreis entsprechend aufgebaut ist. Eine Radbremse 3 ist über eine Bremsleitung 2 an den Hauptzylinder 1 angeschlossen. Sie steht weiterhin über eine Rücklaufleitung 4, in die ein Proportionaldruckbegrenzungsventil 5 eingefügt ist, mit einem Niederdruckspeicher 6 in Verbindung. Eine Pumpe 7 fördert aus dem Niederdruckspeicher 6 über eine Druckleitung 8 in die Bremsleitung 2 unmittelbar unterhalb des Hauptzylinders. Um Druckstöße in der Druckleitung 8 zu verhindern, ist ein Hochdruckspeicher als Dämpfungsspeicher 9 sowie eine Drossel 10 vorgesehen. Ein Rückschlagventil 11 verhindert das Befüllen des Dämpfungsspeichers 9 bei einer Normalbremsung. Die Bremsleitung 2 verfügt über ein Stromregelventil 20, das im folgenden näher erläutert werden soll.

In einem Gehäuse 21 mit einer zweiseitig abgeschlossenen Längsbohrung ist ein Kolben 22 dichtend geführt. Das Gehäuse weist vier Anschlüsse 23, 24 25, 26 auf. Der erste Anschluß 23 ist mit dem Hauptzylinder 1, der zweite und dritte Anschluß 24, 25 sind mit der Radbremse 3 verbunden, der vierte Anschluß 26 führt zum Proportionaldruckbegrenzungsventil 5. Eine Feder 27, die einerseits am Gehäuse 21 und andererseits an einer Stirnfläche des Kolbens 22 abgestützt ist, hält den Kolben in einer Grundstellung. Der Kolben 22 unterteilt die Gehäusebohrung in zwei Kammern, nämlich in eine Auslaßkammer 28 und in eine Einlaßkammer 29. In der Grundstellung des Kolbens 22 weist die Einlaßkammer 29 ihr kleinstes und die Auslaßkammer 28 ihr größtes Volumen auf. Die beiden Kammern 28, 29 sind mittels einer Längsbohrung 30 durch die Achse des Kolbens 22 miteinander verbunden. Der Kolben weist an seiner Mantelfläche zwei Ringnuten 31, 32 auf, die im folgenden als Einlaßringnut 31 und als Auslaßringnut 32 bezeichnet werden. Die schon erwähnte Längsbohrung 30 besteht aus zwei Bohrungsabschnitten 33, 34, wobei der erste Bohrungsabschnitt 33 einen kleineren Durchmesser und der zweite Bohrungsabschnitt 34 einen größeren Durchmesser aufweist. Der erste Bohrungsabschnitt mündet in die Einlaßkammer 29, während der zweite Bohrungsabschnitt in die Auslaßkammer 28 übergeht. Der Übergang zwischen dem ersten Bohrungsabschnitt 33 und dem zweiten Bohrungsabschnitt 34 erfolgt stufenartig. Dies bedeutet, daß die Ringfläche im Übergangsbereich 35 senkrecht zur Längsachse der Bohrung 30 steht. Durchströmt ein Druckmittel die Bohrung 30 von der Einlaßkammer 29 zur Auslaßkammer 28, so erfolgt im stufenartigen Übergangsbereich 35 eine Verwirbelung, die in Abhängigkeit von der Strömungsgeschwindigkeit zu einem definierten Druckgefälle zwischen der Einlaßkammer 29 und der Auslaßkammer 28 führt. Der Übergang 35 wirkt damit als Meßblende für das Stromregelventil 20.

Die Einlaßnut 31 steht über eine oder mehrere Querbohrungen 36 mit dem ersten Bohrungsabschnitt 33 kleineren Durchmessers in Verbindung. Die Querbohrungen 36 können senkrecht zur Achse des Kolbens ausgerichtet sein oder, wie in der Figur 1 dargestellt, eine leichte Neigung gegenüber der Achse aufweisen.

Die Einlaßnut 31 ist nun so angeordnet, daß in der Grundstellung des Kolbens 22 sowohl der erste Anschluß 23 als auch der zweite Anschluß 24 mit ihrem vollen Querschnitt in die Einlaßnut 31 einmünden. Von daher besteht eine direkte Verbindung zwischen dem Hauptzylinder 1 und der Radbremse 3 ohne daß eine Querschnittsverengung vorliegt.

Die Auslaßnut 32, die über eine Querbohrung mit dem Bohrungsabschnitt 34 größeren Querschnitts verbunden ist, weist in der Grundstellung des Kolbens 22 keine Verbindung zu einem der Anschlüsse auf. Wird nun der Kolben 22 wegen eines Druckgefälles zwischen der Einlaßkammer 29 und der Auslaßkammer 28 gegen die Kraft der Feder 27 verschoben, so gelangt die Steuerkante 37, die an die Einlaßnut 31 anschließt, in vollständige Überdeckung zum zweiten Auslaß 24, so daß dieser gesperrt ist. Da der erste Anschluß 23 gegenüber dem zweiten Anschluß 24 versetzt ist, ist der erste Anschluß 23 bei Sperrung des zweiten Anschlusses 24 noch zum Teil geöffnet. Mit Sperren des zweiten Anschlusses 24 gelangt die Auslaßnut 32 in den Überdeckungsbereich des dritten Anschlusses 25, so daß nun eine Verbindung zwischen der Radbremse 3 und dem vierten Auslaß 26 zum Proportionaldruckbegrenzungsventil 5 existiert. Die Verbindung zwischen dem ersten Anschluß 23 und der Einlaßnut 31 wird nun in Abhängigkeit von der Stellung des Kolbens 22 mehr oder weniger stark zusammengeschnürt. Damit ergibt sich die Funktion eines Differenzdruckreglers. Die Stellung des Kolbens 22 bestimmt sich wiederum aus dem Druckgefälle zwischen den Kammern 28 und 29, das sich auf Grund eines Druckabfalls des strömenden Mediums am Übergangsbereich 35 einstellt. Meßblende und Differenzdruckgeber ergeben zusammen die Funktion eines Stromregelventils, so daß sich unabhängig vom Druckgefälle stets ein gleichbleibender Druckmittelstrom einstellt.

Ein weiteres wichtiges Element der Bremsanlage ist das Auslaß- bzw. Proportionaldruckbegrenzungsventil 5.

Es tritt an die Stelle eines elektromagnetisch betätigten 2/2-Wegeventils, das zwei Schaltstellungen kennt, nämlich die offene und die geschlossene Stellung. Die Ansteuerung des Betätigungsmagneten eines derartigen Wegeventils erfolgt über ein pulsbreitenmoduliertes Signal, wobei das Verhältnis von Öffnungs- zu Schließzeiten verändert wird. Das Verhältnis bestimmt die Durchflußmenge pro Zeiteinheit. Im Gegensatz dazu ist bei einem Proportionaldruckbegrenzungsventil ein federbelasteter Schließkörper vorgesehen, der dem Druck an der Eingangsseite des Ventils, in vorliegendem Fall ist dies der Druck am vierten Anschluß 26, ausgesetzt ist. Wenn der Druck in der Lage ist, die Federkraft zu überwinden, öffnet das Ventil und läßt Druckmittel abfließen, bis der Druck am Einlaß unter den eingestellten Öffnungsdruck sinkt. Wird der Schließkörper nun gleichzeitig einer Magnetkraft ausgesetzt, die der Federkraft entgegenwirkt, so kann durch Änderung der Magnetkraft jeder beliebige Öffnungsdruck eingestellt werden.

Magnete, die eine Magnetkraft proportional zum elektrischen Strom einstellen, nennt man Proportionalmagnete.

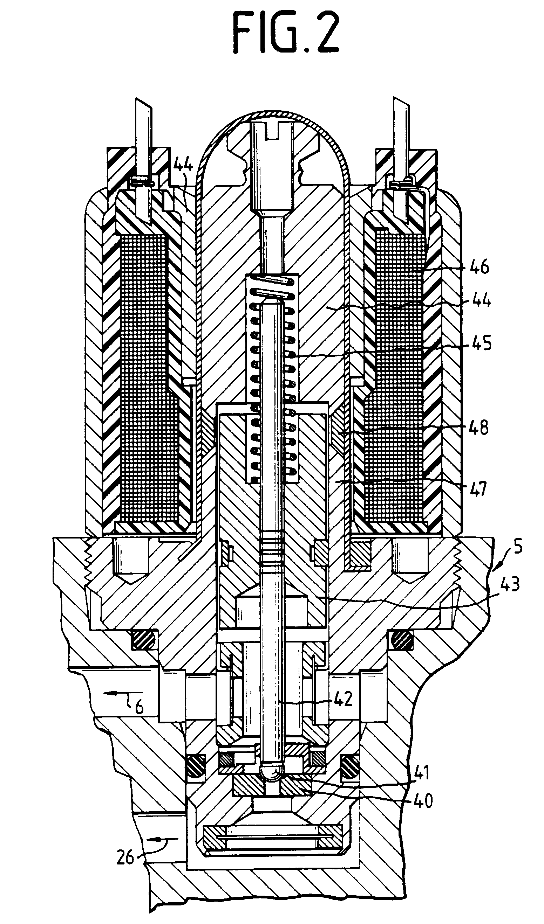

Die Ausführung eines Proportionaldruckbegrenzungsventils ist in der Figur 2 dargestellt. Im unteren Teil erkennt man einen Ventilsitz 40, wobei ein Raum unterhalb des Ventilsitzes 40 zum vierten Anschluß 26 und damit zur Radbremse führt und ein Raum oberhalb des Ventilsitzes mit dem Niederdruckspeicher 6 verbunden ist. Auf dem Ventilsitz liegt ein kalottenförmiger Ventilkörper 41, der mit einem Stößel 42 verbunden ist. Der Stößel 42 ist zentral durch einen kolbenförmigen Anker 43 hindurchgeführt und mit diesem verbunden. Oberhalb des Ankers 43 ist ein Polkern 44 mit einer Ausnehmung angeordnet, in die der Anker 43 eintaucht. Zwischen dem Anker 43 und dem Polkern 44 liegt ein axialer Abstand vor; zwischen dem Anker 43 und dem Rand der Ausnehmung ein radialer Abstand. Weiterhin ist eine Feder 45 vorgesehen, die einerseits am Polkern und andererseits am Anker abgestützt ist.

Der Anker ist von einer Führungshülse 47 umgeben, wobei ein radialer Spalt zwischen dem Anker 43 und der Führungshülse 47 vorgesehen ist. Ein Spalt 48 besteht auch zwischen dem Polkern 44 und der Führungshülse 47. Eine Spule 46 umgibt den Polkern 44 und den Anker 43 und die Führungshülse 47.

Die Feder 45 hält nun den Ventilkörper 41 auf dem Ventilsitz 40, so daß die Verbindung zwischen dem Anschluß 26 und dem Niederdruckspeicher 6 unterbrochen ist. Die Federkraft ist so eingestellt, daß der maximal erzielbare Bremsdruck nicht in der Lage ist, den Ventilkörper 41 vom Ventilsitz 40 abzuheben.

Wird nun die Spule an ein Stromerzeugungssystem angeschlossen, so bewirkt der durch die Spule 46 fließende Strom einen Magnetfluß durch den Anker 43. Die dabei erzeugte Magnetkraft zieht den Anker 43 in das Spulensystem hinein, wobei durch die richtige Abstimmung von Axialluftspalt zu Radialluftspalt eine vom Hub unabhängige Kraft eingestellt werden kann. Die auf den Anker 43 wirkende Kraft hängt dann nur noch von der Stromstärke ab, mit der die Spule 46 beaufschlagt wird. Die Technik der Proportionalmagnete ist wohl bekannt und braucht an dieser Stelle nicht weiter erläutert zu werden. Zur Versorgung der Spule 46 mit einem konstanten Strom kann ein Spannungs-Strom-Wandler vorgesehen werden, der als Leistungsverstärker dient und dem Magneten einen zur Eingangsspannung proportionalen Strom einprägt. Denkbar ist auch eine Schaltung, die auf Grund von pulsbreitenmodulierten Spannungssignalen einen konstanten Strom erzeugt.

Die in der Figur 1 und 2 beschriebene Bremsanlage arbeitet wie folgt:

Eine Bremsung wird durch Niedertreten des symbolisch angedeuteten Pedals eingeleitet. Druckmittel fließt vom Hauptzylinder 1 über den Anschluß 23 die Einlaßnut 31 und dem zweiten Anschluß 24 zur Radbremse 3. Damit wird im Bremskreis ein Druck aufgebaut, der zu einer Radverzögerung und letztlich zu einer Fahrzeugverzögerung führt.

Das Drehverhalten des Rades wird während einer Bremsung durch nicht dargestellte Sensoren überwacht. Erkennt die angeschlossene Auswerteelektronik, daß die Gefahr besteht, daß das Rad blockiert, so erzeugt sie ein Strom- bzw. Spannungssignal für das Proportionaldruckbegrenzungsventil 5 und setzt die Pumpe 7 in Betrieb.

Der Öffnungsdruck des Ventils 5 wird herabgesetzt und liegt nun unterhalb des momentanen Bremsdrucks.

Das aus der Auslaßkammer 28 abfließende Druckmittel läßt Druckmittel aus der Einlaßkammer 29 bzw. von der Radbremse 3 nachfließen. Das sich am Übergangsbereich 35 einstellende Druckgefälle bewirkt eine Verschiebung des Kolbens 22, so daß, wie schon erläutert, der zweite Anschluß 24 gesperrt und der dritte Anschluß 25 geöffnet wird. Die Radbremse 3 steht nunmehr mit dem Bohrungsbereich 34 stromabwärts des Übergangsbereichs 35 in Verbindung. Der Anschluß 23 wird durch die Steuerkante 37 soweit abgedrosselt, daß sich im Zusammenspiel mit dem Druckgefälle am Übergangsbereich 35 ein konstanter Druckmittelstrom vom Anschluß 23 zum Anschluß 25 bzw. 26 einstellt.

Mit dem Proportionaldruckbegrenzungsventil 5 kann nun ein Druck in der Radbremse 3 eingestellt werden, der proportional ist zur Stärke des Stroms durch die Magnetspule 46. Diese wird nun so eingestellt, daß das Rad einen Schlupf aufweist, der es ermöglicht, sowohl maximale Längskräfte als auch Seitenführungskräfte am Rad zu übertragen. Das über das Proportionaldruckbegrenzungsventil 5 abfließende Druckmittel wird vom Niederdruckspeicher 6 aufgenommen und von der Pumpe 7 zurück in den Bremskreis geleitet.

Da das Signal für das Proportionaldruckbegrenzungsventil 5 proportional zum Druck in der Radbremse ist, läßt sich in der Auswerteeinheit eine Lernschaltung installieren, die zu einer Verbesserung der Regelgüte führt. Die Geschwindigkeit des Druckab- bzw. -aufbaues läßt sich nun durch eine entsprechend langsame bzw. schnelle Spulenstromänderung hervorrufen, so daß beliebige Druckabbau- bzw. -aufbaugradienten eingestellt werden können.

Die Verwendung eines Proportionaldruckbegrenzungsventils 5 läßt sich auf jede Art von blockiergeschützten Bremsanlagen übertragen. Im Zusammenspiel mit einem Stromregelventil ergeben sich aber besondere Vorteile.

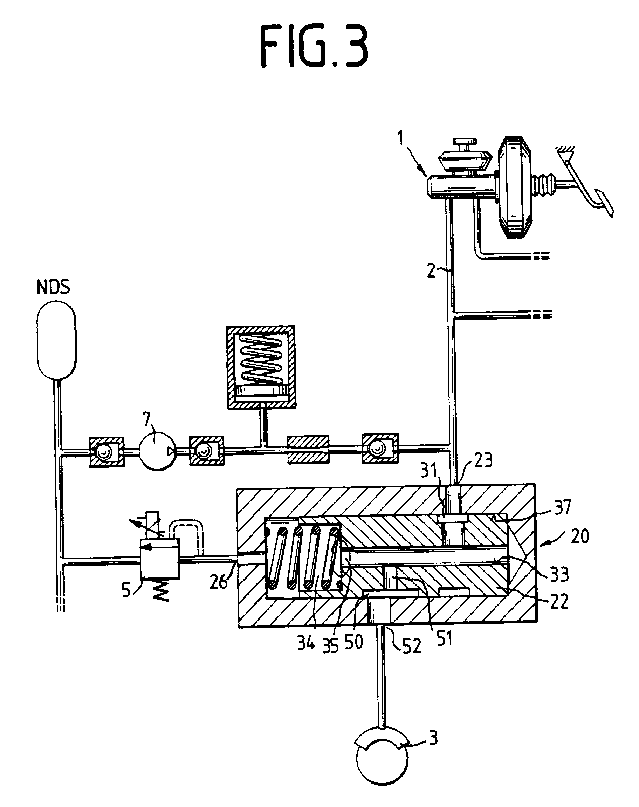

Die Ausführungsform nach Figur 3 zeigt eine etwas andere Form für das Stromregelventil 20. Ansonsten ist der Aufbau der Bremsanlage identisch mit der nach Figur 1, so daß auf eine Erläuterung der Anlage an dieser Stelle verzichtet wird.

Das Stromregelventil 20 nach Figur 1 ist so ausgelegt, daß in der Regelposition des Kolbens 22 die Radbremse 3 unterhalb des Übergangsbereichs 35, also zwischen dem Übergangsbereich 35 und dem vierten Anschluß 26, anschließt. Das Stromregelventil 20 nach Figur 3 ist nun so konstruiert, daß auch dann, wenn der Kolben 22 in die Regelposition fährt, der Anschluß der Radbremse oberhalb des Übergangsbereichs 35 erfolgt. Dazu ist eine Ringnut 50 vorgesehen, die über eine Querbohrung 51 mit dem ersten Bereich 33 der Längsbohrung im Kolben 22 verbunden ist. Die Radbremse 3 steht über einen Radbremsanschluß 52 ständig mit der Ringnut 50 in Verbindung und zwar unabhängig von der Lage des Kolbens 22. Die Einlaßnut 31 hat nun keine unmittelbare Verbindung mehr zur Radbremse, sondern dient mit Hilfe ihrer Steuerkante 37 lediglich dazu, den ersten Anschluß 23 zu drosseln.

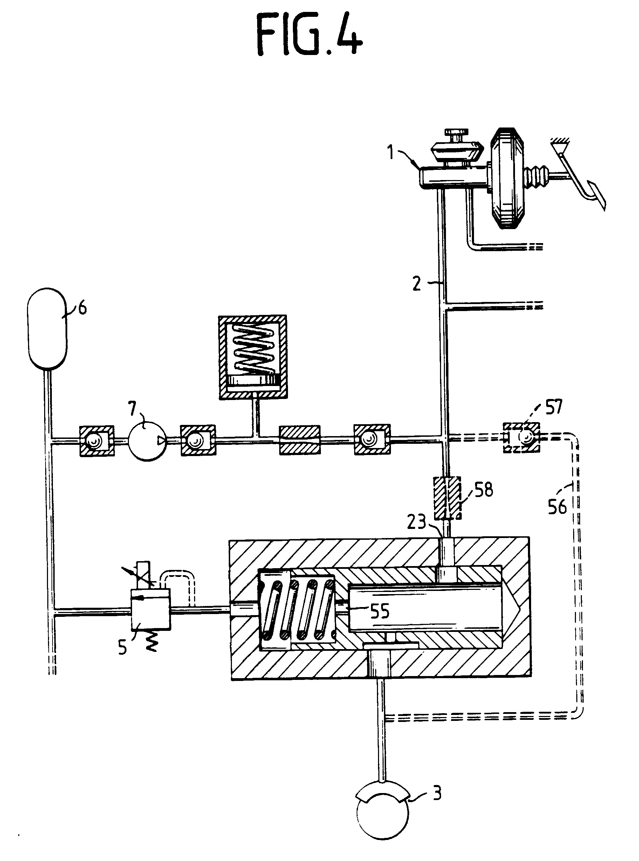

Die Figur 4 entspricht der Figur 3, wobei im Unterschied zu Figur 3 anstelle einer sprungartigen Querschnittserweiterung eine Blende 55 vorgesehen ist. Unter "Blende" sei hier eine abrupte Querschnittsverengung mit sich anschließender abrupter Querschnittserweiterung verstanden, wobei die Länge, auf der die Querschnittsverengung vorliegt, relativ klein ist.

Sowohl an der Blende 55 als auch an der Querschnittserweiterung 35 findet eine Druckänderung in Abhängigkeit von der Strömungsgeschwindigkeit statt. Beide haben die Funktion einer Meßblende für das Stromregelventil 20.

Figur 4 zeigt zusätzlich eine Bypassleitung 56 mit einem Rückschlagventil 57. Hierbei handelt es sich um eine Maßnahme, mit der erreicht werden soll, daß der Druck in der Radbremse 3 auf den Hauptzylinderdruck begrenzt wird. Zusätzlich wird erreicht, daß beim Druckabbau die Drossel 58 nicht wirksam ist. Diese Maßnahme kann bei allen Bremsanlagen, die in dieser Anmeldung vorgestellt werden, eingesetzt werden. In den anderen Figuren wurde der Übersichtlichkeit wegen auf eine besondere Darstellung verzichtet. Das gleiche gilt für eine zusätzliche Drossel 58 am ersten Anschluß 23, um eine Begrenzung des Druckaufbaugradienten bei einer Normalbremsung zu gewährleisten.

Wie schon in der Ausführungsform nach Figur 1 bzw. 3 erläutert, stellt sich während einer Bremsschlupfregelung ein konstanter Druckmittelstrom am Stromregelventil ein. Da nun aber die Radbremse stets oberhalb der Meßblende anschließt, ergeben sich folgende Vorteile. Der über das Druckbegrenzungsventil 5 abfließende Strom setzt sich zusammen aus dem Druckmittelstrom, der vom Hauptzylinder 1 bzw. der Pumpe 7 herrührt, und dem Druckmittelstrom aus der Radbremse 3. Der Druckmittelstrom aus der Radbremse 3 wird somit nicht dem vom Stromregelventil eingestellten Strom überlagert, sondern ist Teil des geregelten Druckmittelstroms. Dadurch muß weniger Druckmittel nachfließen und weniger Druckmittel über das Proportionalventil abfließen. Die vorgesehenen Öffnungsquerschnitte am Proportionalventil können kleiner gewählt werden, und die Leistungsfähigkeit der Pumpe kann verringert werden.

Besondere Vorteile ergeben sich dadurch, daß bei einem schnellen Druckabbau der Kolben 22 so weit nach links geschoben wird, daß der Anschluß 23 vollständig geschlossen wird. Dadurch kann kein Druckmittel nachfließen, so daß der Druck in der Radbremse rasch sinkt. Auf der anderen Seite wird bei einem raschen Druckaufbau der Kolben 22 so weit nach rechts geschoben, daß der Anschluß 23 nicht mehr gedrosselt ist, so daß Druckmittel ungehindert nachfließen kann.

Es stellt sich daher beim Druckaufbau ein erhöhter Druckmittelstrom am ersten Anschluß 23 ein, so daß ein schneller Druckaufbau erfolgen kann.

Mit Hilfe des Proportionaldruckbegrenzungsventils 5 kann nun wiederum jeder beliebige Druck in der Radbremse eingestellt werden.

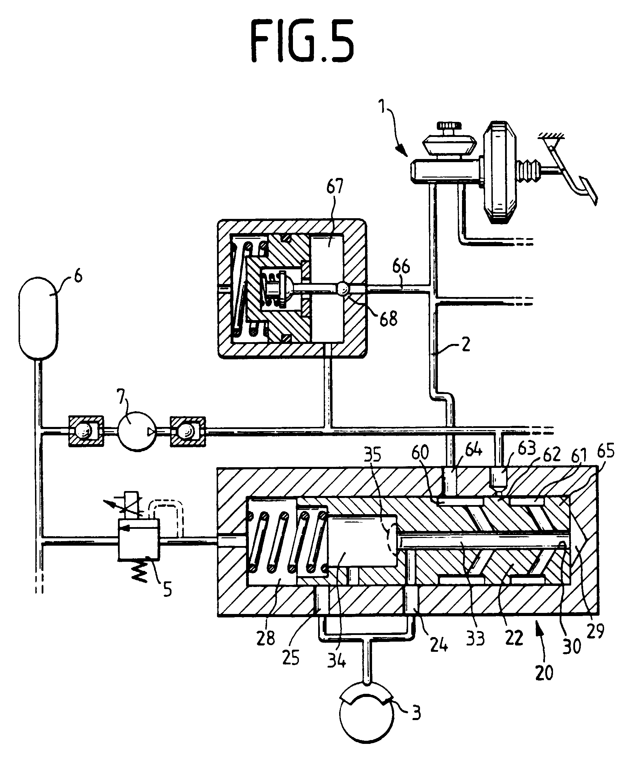

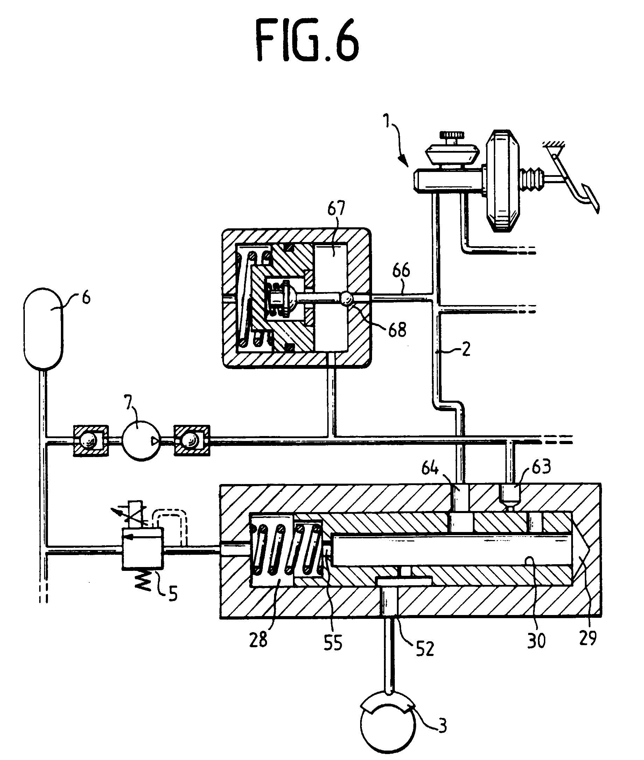

Im folgenden werden die Figuren 5 und 6 beschrieben. Die dort dargestellten Bremsanlagen bzw. Stromregelventile 20 sind weitgehend identisch zu den Ausführungsformen nach Figur 1, 3 und 4. Im folgenden werden daher nur die Unterschiede dargestellt.

Es ist wiederum ein Kolben 22 vorgesehen, der in einer Gehäusebohrung gleitet und mit seinen Stirnflächen eine Auslaßkammer 28 und eine Einlaßkammer 29 begrenzt. Die beiden Kammern sind durch eine zentrale Längsbohrung 30 miteinander verbunden. Die Längsbohrung 30 weist entweder ein Übergangsbereich 35, wie in Figur 5 dargestellt, oder aber eine Blende 55, wie in Figur 6 dargestellt, auf.

Der Anschluß der Radbremse 3 orientiert sich entweder an der Ausführung nach Figur 1 oder an die Ausführung nach Figur 3.

Figur 5 orientiert sich an Figur 1, d.h. die Radbremse weist zwei Anschlüsse 24, 25 auf, die umgeschaltet werden, sobald der Kolben 22 seine Grundposition verläßt und in die Regelposition verschoben wird. In der Grundposition ist die Radbremse 3 mit dem Bohrungsabschnitt 33 oberhalb des Übergangsbereichs 35 bzw. der Blende 55 verbunden und in der Regelposition mit dem Bohrungsabschnitt 34 unterhalb des Übergangsbereichs 35 bzw. der Blende 55.

Die Ausführung nach Figur 6 orientiert sich an der Ausführung nach Figur 3. Die Radbremse weist einen einzigen Anschluß 52 auf, der unabhängig davon, ob der Kolben 22 sich in der Grund- oder Regelposition befindet, stets mit dem Abschnitt der Längsbohrung 30 verbunden ist, der oberhalb des Übergangsbereichs 35 bzw. der Blende 55 angeordnet ist.

Der Unterschied zu den bisherigen Ausführungsformen besteht nun darin, daß der erste Anschluß 23 aufgeteilt wird in einen Hauptzylinderanschluß 64 und einen Pumpenanschluß 63. Der Hauptzylinderanschluß 64 ist nur mit dem Hauptzylinder 1 verbunden, während der Pumpenanschluß 63 mit der Pumpe 7 verbunden ist. Die Anschlüsse 63, 64 korrespondieren mit Ringnuten 60, 61 in der Mantelfläche des Kolbens 22, die wiederum über Querbohrungen mit der Bohrung 30 oberhalb des Übergangsbereichs 35 bzw. der Blende 55 verbunden sind. Die Nuten 60, 61 sind durch einen Steg 62 voneinander getrennt. In der Grundstellung des Kolbens 22 ist der Hauptzylinderanschluß 64 mit der ersten Nut 60 verbunden, während der Pumpenanschluß 63 durch den Steg 62 verschlossen ist.

Wird der Kolben 22 während einer Bremsdruckregelung gemäß der Darstellung nach links geschoben, so schließt der Steg 62 den Haupztzylinderanschluß 64, während der Steg 65, der die andere Seite der zweiten Nut 61 begrenzt, den Pumpenanschluß 63 teilweise sperrt.

Während einer Regelung ist damit der Hauptzylinder vom Bremskreis abgekoppelt, und lediglich der Druckmittelstrom, der von der Pumpe 7 herrührt, wird am Anschluß 63 geregelt.

Auch bei dieser Ausführung ergeben sich die Vorteile, die zu Figur 4 beschrieben worden sind. Bei einem schnellen Druckabbau werden beide Anschlüsse 63, 64 gesperrt. Bei einem raschen Druckaufbau wird Anschluß 64 ungedrosselt freigegeben.

Die Abkopplung des Hauptzylinders ist aber nicht vollständig. Wird nämlich die Fördermenge der Pumpe 7 reduziert, weil an ihrer Saugseite nicht genügend Druckmittel zur Verfügung steht, so führt dies zu einer Reduzierung des Druckgefälles am Übergangsbereich 35 bzw. an der Blende 55. Der Kolben fährt gemäß der Darstellung nach rechts und gibt den Hauptzylinderanschluß 64 frei, so daß nun zusätzliches Druckmittel aus dem Hauptzylinder nachfließen kann und die Strommengenbilanz ausgeglichen wird.

Für den Fall, daß die Pumpe mehr fördert, als über den Anschluß 63 in das Stromregelventil einfließen kann, ist eine Direktleitung 66 vorgesehen, die die Druckseite der Pumpe 7 mit dem Hauptzylinder verbindet. Diese Leitung schließt an einen Speicher 67 an und verfügt über ein Sperrventil 68. Der Ventilkörper des Ventils 68 ist mit dem Kolben des Speichers 67 verbunden, so daß ab einem bestimmten Füllgrad des Speichers das Sperrventil 68 öffnet und die Druckmittelmenge, die nicht vom Speicher aufgenommen wird, zum Hauptzylinder fließt. Das Aufnahmevolumen des Speichers 67 braucht nicht sehr groß zu sein, da es lediglich zur Aufnahme von überschüssigem Druckmittel dient, das Druckspitzen infolge Pumpenpulsation erzeugen würde.

Durch die Trennung von Hauptzylinder und Pumpe, wobei Hauptzylinder und Pumpe jeweils über einen Anschluß an das Stromregelventil 20 verfügen, sind die Rückwirkungen der Regelvorgänge auf das Pedal reduziert. Das Pedal behält während einer Bremsdruckregelung im wesentlichen die Stellung ein, die es zu Beginn der Regelung inne hatte. Der Effekt wird als "ruhiges Pedal" bezeichnet.

Wie schon erläutert, entspricht die Ausführungsform nach Figur 6 der Ausführungsform nach Figur 5, sie weist ebenfalls einen Hauptzylinderanschluß 64 und einen Pumpenanschluß 63 auf.

Statt eines Übergangsbereichs 35 ist eine Blende 55 in der Bohrung 30 vorgesehen.

Die Radbremse ist stets oberhalb des Übergangsbereichs 35 bzw. der Blende 55 angeschlossen.

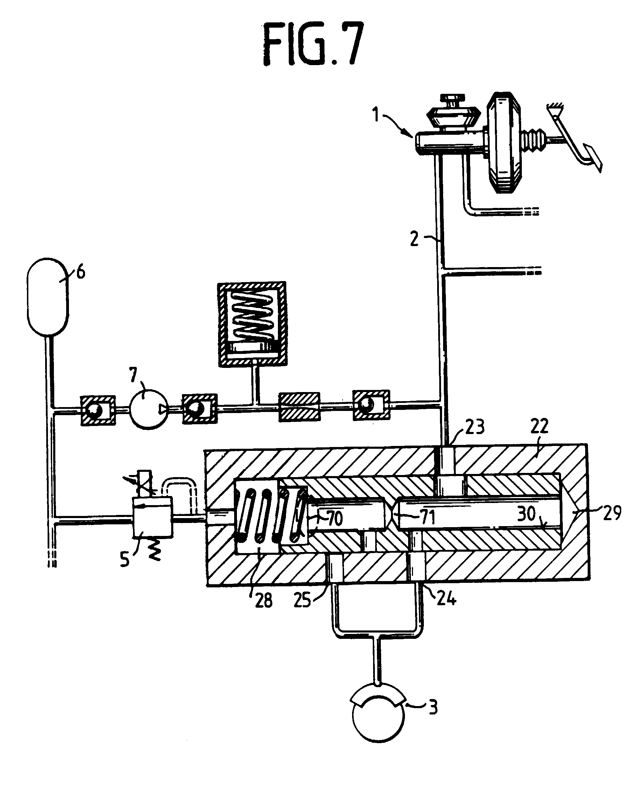

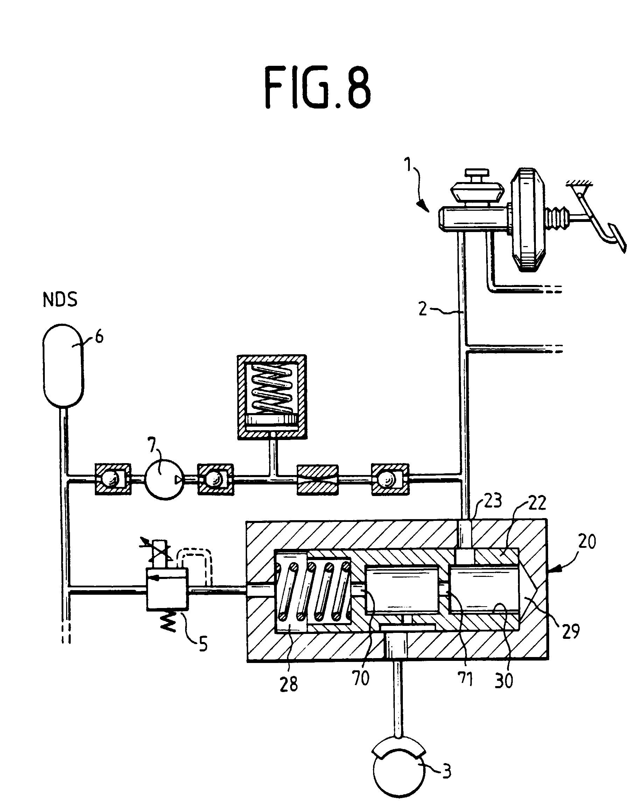

In den Figuren 7 und 8 wird eine weitere Idee berücksichtigt, die im folgenden erläutert werden soll. Der Grundgedanke besteht darin, daß die Meßblende aus zwei Einzelblenden gebildet wird, wobei der Anschluß der Radbremse in der Regelposition des Kolbens 22 zwischen den beiden Blenden liegt.

Der Aufbau der Bremsanlage gemäß den Figuren 7 und 8 entspricht dem Aufbau der Bremsanlage nach Figur 1 bzw. 3.

Ein Kolben 22 ist in einer Bohrung dichtend geführt und trennt Einlaßkammer 29 und Auslaßkammer 28 voneinander ab. Die Längsbohrung 30 weist zwei Meßblenden auf, nämlich eine erste Blende 70 und eine zweite Blende 71. Gemäß der Ausführung nach der Figur 7 ist die erste Blende als sprungartige Erweiterung, ähnlich der Darstellung der Figur 1, realisiert und die zweite Blende als Querschnittsverengung, ähnlich der Darstellung der Figur 6.

In Figur 8 sind beide Blenden als Querschnittsverengungen dargestellt. Andere Kombinationen sind möglich.

In der Figur 7 weist die Radbremse zwei Anschlüsse 24, 25 auf, wobei in der Grundposition des Kolbens der Anschluß 24 mit dem Bohrungsbereich oberhalb der zweiten Blende verbunden ist und in der Regelposition die Radbremse mit dem Bereich zwischen der ersten und zweiten Blende verbunden wird.

In der Figur 8 ist lediglich ein Anschluß für die Radbremse vorgesehen, die unabhängig von der Position des Kolbens 22 ständig mit dem Bereich der Bohrung 30 zwischen den beiden Blenden verbunden ist.

Das Stromregelventil 20 ist jeweils mit einem ersten Anschluß 23 versehen, an dem sowohl der Hauptzylinder als auch die Pumpe anschließt. In den Ausführungen nach Figur 7 und 8 kann natürlich auch ein Doppelanschluß vorgesehen werden, so wie in Figur 5 bzw. 6 beschrieben.

Als Blendenform kann jede Form eingesetzt werden, die in dieser Anmeldung aufgezeigt worden ist. So können zum Beispiel auch zwei sprungartige Erweiterungen vorgesehen werden.

Mit dem Einsatz von zwei Meßblenden ergibt sich die folgende Funktionsweise.

Beim Druckabbau fließt Druckmittel aus der Auslaßkammer 28 ab, das im wesentlichen mit Druckmittel aus der Radbremse ersetzt wird. Ein Nachströmen aus der Einlaßkammer 29 wird durch die zweite Blende 71 verhindert. Dadurch stellt sich ein relativ großes Druckgefälle zwischen den Kammern 28 und 29 ein, wodurch der Kolben 22 verschoben und der erste Anschluß 23 geschlossen wird. In der Druckabbauphase kann also wenig Druckmittel über den ersten Anschluß 23 nachströmen, so daß der Druckabbau relativ rasch erfolgen kann. Über das Druckbegrenzungsventil 5 braucht daher nur die Druckmittelmenge abzufließen, die aus der Radbremse herrührt.

Gerade umgekehrt verhält es sich beim Druckaufbau. Das Druckbegrenzungsventil 5 wird auf einen höheren Druck eingestellt. Dieser wird in der Auslaßkammer 28 wirksam und drängt den Kolben 22 nach rechts, wodurch der erste Anschluß 23 vollständig geöffnet wird. Druckmittel kann nun über die zweite Blende 71 in die Radbremse einströmen. Da die Druckminderung in der Radbremse nicht sofort in der Auslaßkammer 28 wirksam wird, bleibt der Kolben 22 in einer Position, in der der Anschluß 23 geöffnet ist, so daß ein rascher Druckaufbau erfolgen kann. Der Druckaufbaugradient wird lediglich bestimmt durch die Bemessung der zweiten Blende 71.

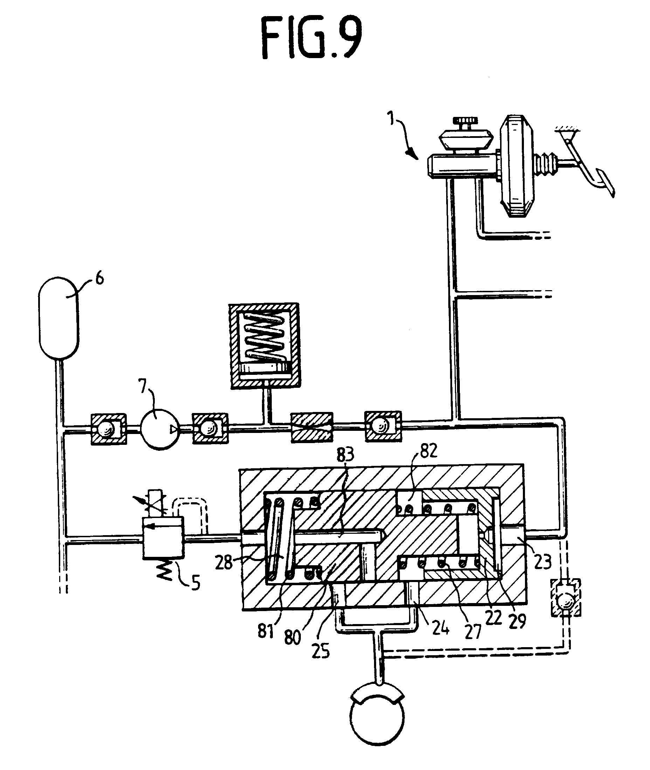

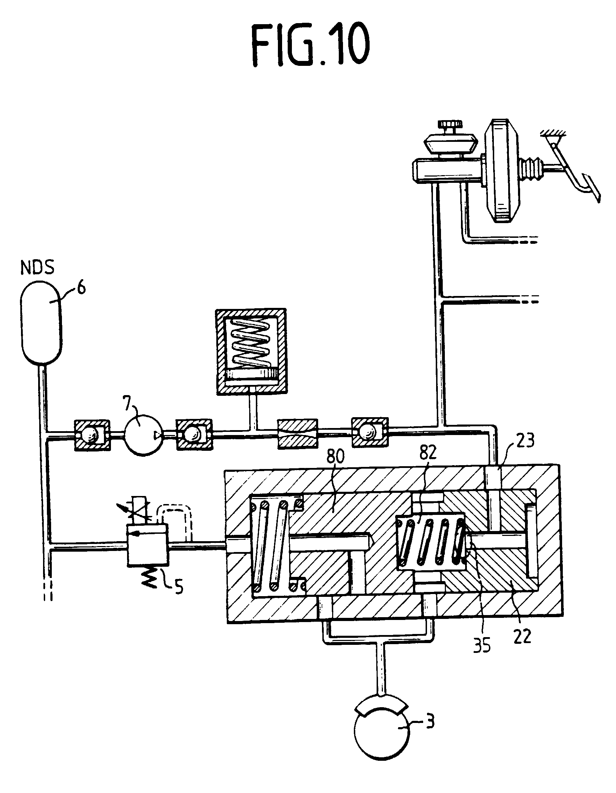

Eine weitere Idee, die mit allen Stromregelventilen der vorhergehenden Figuren kombiniert werden kann, ist in den Figuren 9 und 10 dargestellt. Das Stromregelventil 20 enthält, wie schon ausführlich erläutert, einen Kolben 22, der im folgenden als Stromregelventilkolben bezeichnet werden soll. In der gleichen Bohrung ist ein Haltekolben 80 angeordnet. Dieser ist am Stromregelventilkolben 22 abgestützt. Zwischen den Kolben ist eine Feder vorgesehen, die in der Wirkungsweise der Feder 27 gemäß der Figur 1 entspricht. Zwischen dem Boden der Gehäusebohrung und dem Haltekolben 80 ist eine weitere Feder 81 vorgesehen, die den Haltekolben 80 in Anlage an dem Stromregelventilkolben 22 hält. Die Gehäusebohrung weist somit drei Kammern auf, eine Einlaßkammer 29, die vom Stromregelventilkolben 22 begrenzt wird, eine Zwischenkammer 82 zwischen den Kolben und eine Auslaßkammer 28, begrenzt vom Haltekolben 80. Über einen Anschluß 23 schließt der Hauptzylinder bzw. die Pumpe an die Einlaßkammer 29 an. Der zweite Anschluß 24 mündet in die Zwischenkammer 82, ein dritter Anschluß 25 ist mit der Auslaßkammer 28 verbindbar. Diese wiederum steht über einen vierten Anschluß 26 mit dem Auslaßventil 5 in Verbindung. In der dargestellten Grundstellung hält der Haltekolben 80 den dritten Anschluß 25 gesperrt. Wird der Haltekolben 80 gegen die Kraft der Feder 81 verschoben, so wird über ein Kanalsystem 83 im Haltekolben 80 der dritte Anschluß 25 mit der Auslaßkammer 28 verbunden.

Der Stromregelventilkolben 22 weist, wie schon erläutert, entweder eine Querschnittsverengung (Figur 9) oder aber eine spontane Querschnittserweiterung (Figur 10) auf.

Bei einer Verschiebung des Stromregelventilkolbens 22 wird gemäß der Figur 9 der zweite Anschluß 24 zur Radbremse durch den Kolben 22 eingeschnürt, während in der Figur 10, wie schon aus den vorhergehenden Ausführungsformen bekannt, der erste Anschluß 23 abgeschnürt wird.

Die Verwendung eines Haltekolbens 80 macht vor allem dann Sinn, wenn bei einer Normalbremsung der Druckaufbau durch die Meßblende des Stromregelventils erfolgt. Wenn nämlich der Hauptzylinder betätigt wird, kann sich an der festen Blende ein Druckgefälle einstellen, wobei das Stromregelventil in nicht beabsichtigter Weise in Funktion gesetzt wird. Durch den federbelasteten Haltekolben wird aber der Stromregelventilkolben 22 in seiner Grundposition gehalten, so daß er seine Regelfunktion nicht aufnehmen kann.

In einer Regelung aber wird, wie schon erläutert, das Auslaßventil bzw. das Proportionaldruckbegrenzungsventil 5 geöffnet, so daß aus der Auslaßkammer 28 Druckmittel abfließen kann. Die Feder 27 drückt den Haltekolben gemäß der Darstellung nach links, wobei die Verbindung zwischen dem dritten Anschluß 25 und dem vierten Anschluß 26 geöffnet wird. Die Radbremse steht nun unmittelbar mit dem Proportionaldruckbegrenzungsventil 5 in Verbindung. Der Haltekolben 80 hat sich vom Stromregelventilkolben 22 gelöst, so daß dieser seine funktionsgemäße Aufgabe übernehmen kann.

Der Haltekolben 80 bleibt während der gesamten Dauer der Regelung in seiner verschobenen Position. Mit Beendigung der Regelung kehrt er in seine Ausgangsposition zurück, wobei Druckmittel in die Kammer 28 über kleine Leckagen in der Kolbendichtung des Haltekolbens 80 fließt. Gegebenenfalls kann vorgesehen werden, daß das Proportionaldruckbegrenzungsventil 5 kurzzeitig geöffnet wird.

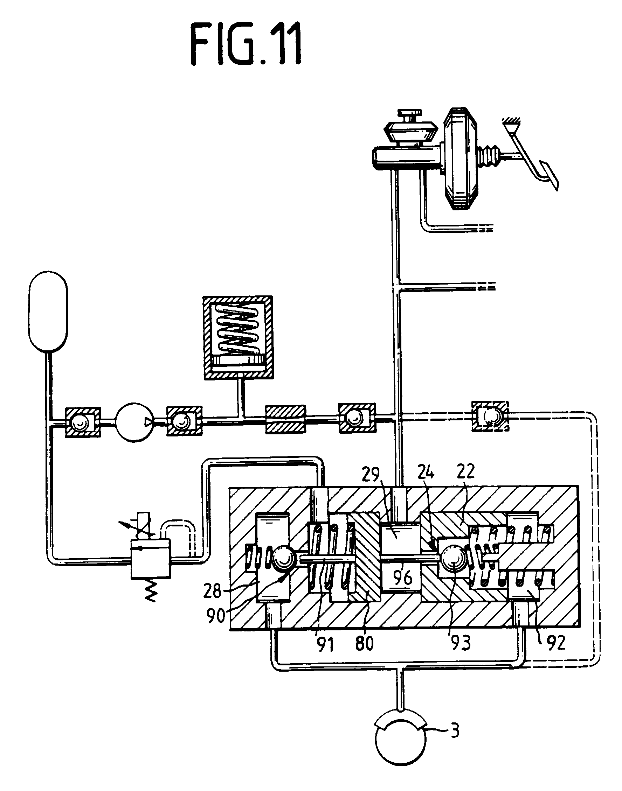

Die Ausführung nach Figur 11 kennt ebenfalls ein Stromregelventil 20, das während einer Normalbremsung wirkungslos gestellt wird. Dazu ist ein Haltekolben 80 vorgesehen, der mit seiner einen Stirnseite den Auslaßraum 28 und mit seiner anderen Stirnseite den Einlaßraum 29 begrenzt. Die Verbindung zwischen dem dritten Anschluß 25 und dem Auslaßraum 28 erfolgt über ein Sitzventil 90, das über einen Stößel 91 am Haltekolben 80 betätigt wird. Wird der Druck im Auslaßraum 28 durch Öffnen des Proportionaldruckbegrenzungsventils 5 gesenkt, so treibt der Hauptzylinderdruck den Haltekolben 80 gegen die Kraft einer Feder gemäß der Darstellung nach links, wobei das Ventil 90 geöffnet wird und eine unmittelbare Verbindung zwischen der Radbremse und dem Proportionaldruckbegrenzungsventil 5 hergestellt wird.

An den Einlaßraum 29 schließt der Stromregelventilkolben 22 an, der mit seiner anderen Stirnseite eine weitere Kammer 92 begrenzt, die mit der Radbremse über einen zweiten Anschluß 24 in Verbindung steht. Der Kolben 22 weist eine zentrale Bohrung auf, auf die eine Ventilkugel 93 aufsetzbar ist. Der Dichtsitz weist eine Kerbe oder Ausnehmung 94 auf, die, falls die Ventilkugel 93 auf den Ventilsitz aufsitzt, eine gedrosselte Strömungsverbindung zwischen der Einlaßkammer 29 und der weiteren Kammer 92 zuläßt. Die Kerbe 94 bildet die Meßblende.

Der Kolben 22 ist gegen die Kraft einer Feder bewegbar und schließt dabei den zweiten Anschluß 24. Kolben 22 und Anschluß 24 bilden den Differenzdruckregler. Es ergibt sich eine Stromregelfunktion.

Der Haltekolben 80 ist nun mit einem weiteren Stößel 96 versehen, der an die Ventilkugel 93 anlegbar ist. In der Grundstellung des Stromregelventilkolbens 22 und in der Ruhestellung des Haltekolbens 80 hält der weitere Stößel 96 die Ventilkugel 93 vom Ventilsitz entfernt, so daß eine ungedrosselte Verbindung durch die genannte Bohrung möglich ist.

Bewegt sich der Haltekolben 80 aus der Ruhestellung, so setzt sich die Ventilkugel 93 auf den Ventilsitz auf, so daß die Kerbe 94 wirksam wird und die Stromregelfunktion einsetzen kann.

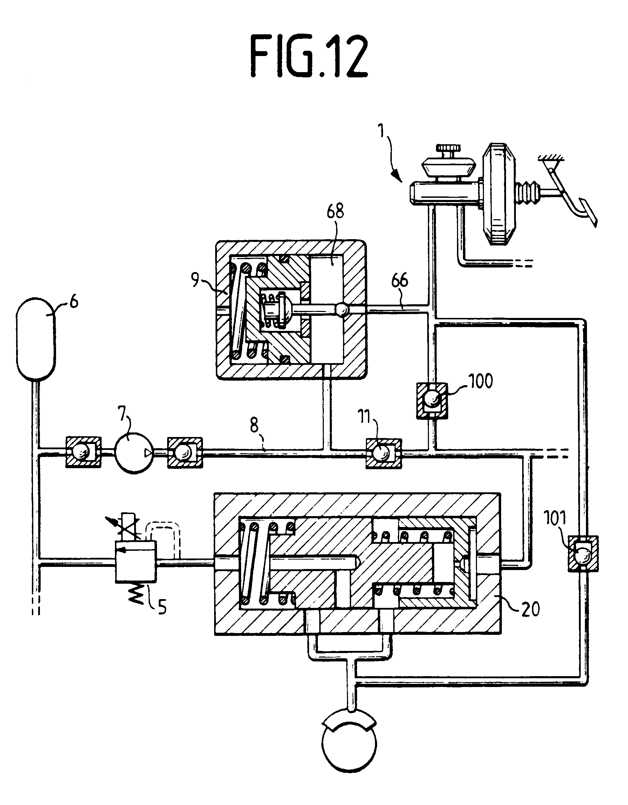

In Figur 12 ist nochmals eine Bremsanlage dargestellt, die ein Stromregelventil beinhaltet. Das Stromregelventil entspricht der Darstellung nach Figur 9, es kann aber jedes Stromregelventil der vorherigen Figuren eingesetzt werden. Wichtig ist, daß in der Bremsleitung, und zwar zwischen Hauptzylinder 1 und der Einmündung der Druckleitung 8 in die Bremsleitung ein erstes Rückschlagventil 100 eingesetzt ist, das zum Hauptzylinder hin sperrt. Ein zweites Rückschlagventil 101 verbindet die Radbremse mit dem Hauptzylinder 1, wobei das Rückschlagventil zum Hauptzylinder hin öffnet. An die Druckleitung 8 schließt ein Hochdruckspeicher 9 an. Dieser ist, wie in Figur 1, durch ein Rückschlagventil 11 gesichert, so daß bei einer Normalbremsung nicht der Hochdruckspeicher gefüllt wird.

Durch das Stromregelventil 20 wird ein konstanter Druckmittelstrom eingestellt, der von der Pumpe geliefert wird. Da es sich hier im allgemeinen um eine Rotationskolbenpumpe handelt, unterliegt die Förderleistung leichten Schwankungen, so daß Druckspitzen nicht zu vermeiden sind. Diese sollen durch den Hochdruckspeicher 9 abgefangen werden. Das Rückschlagventil 100 verhindert, daß Druckmittel von der Pumpe in den Hauptzylinder gelangt, so daß während einer Regelung das Pedal ruhig bleibt. Siehe auch Erläuterung zu Figur 5 und 6. Der Hochdruckspeicher kann mit einem Sperrventil 68 versehen werden, das eine Direktleitung 66 zum Hauptzylinder öffnet. Das Ventil 68 wird vom Kolben des Hochdruckspeichers betätigt, so daß, wenn der Hochdruckspeicher ein gewisses Füllvolumen erreicht hat, die Direktleitung geöffnet wird. Dies hat den Vorteil, daß das maximale Aufnahmevolumen des Speichers gering gehalten werden kann, da überschüssiges Druckmittel in den Hauptzylinder gelangt.

Bei einer Normalbremsung erfolgt der Druckaufbau über das erste Rückschlagventil 100 und der Druckabbau über das zweite Rückschlagventil 101.

Mit dem Sperrventil 68 ergibt sich somit eine Druckbegrenzungsfunktion. Der Druck in der Leitung 8 wird auf den Wert begrenzt, bei dem das Ventil 68 öffnet.

Ist ein derartiges Ventil nicht vorgesehen, so kann der Druck dennoch nicht beliebig ansteigen, da bei anwachsendem Druck die Förderleistung der Pumpe sinkt bis sie einen Wert erreicht hat, der der Durchflußrate des Stromregelventils entspricht.

Sämtliche Ausführungsbeispiele sind mit einem Proportionaldruckbegrenzungsventil 5 in der Auslaßleitung dargestellt. Mit diesem Druckbegrenzungsventil kann ein gleichmäßig abfließender Druckmittelstrom eingestellt werden. In Kombination mit einem Stromregelventil im Zufluß ergibt sich somit ein schwingungsarmes Regelverhalten und insgesamte eine geräuschreduzierte Anlage.

Das verbesserte Geräuschverhalten, das durch die Kombination eines Proportionaldruckbegrenzungsventils mit einem Stromregelventil erzielt wird, kann durch die Maßnahme gemäß der Figur 12 noch weiter verbessert werden, wobei gleichzeitig ein ruhiges Pedalverhalten während einer Regelung erzielt wird.

### Bezugszeichenliste

- 1: Hauptzylinder
- 2: Bremsleitung
- 3: Radbremse
- 4: Rücklaufleitung
- 5: Proportionaldruckbegrenzungsventil
- 6: Niederdruckspeicher
- 7: Pumpe
- 8: Druckleitung
- 9: Dämpfungsspeicher
- 10: Drossel
- 11: Rückschlagventil

- 20: Stromregelventil
- 21: Gehäuse
- 22: Kolben
- 23: erster Anschluß
- 24: zweiter Anschluß
- 25: dritter Anschluß
- 26: vierter Anschluß
- 27: Feder
- 28: Auslaßkammer
- 29: Einlaßkammer
- 30: Längsbohrung
- 31: Einlaßringnut
- 32: Auslaßringnut
- 33: erster Bohrungsabschniit
- 34: zweiter Bohrungsabschnitt
- 35: Übergangsbereich
- 36: Querbohrung
- 37: Steuerkante
- 40: Ventilsitz
- 41: Ventilkörper
- 42: Stößel
- 43: Anker
- 44: Polkern
- 45: Feder
- 46: Spule
- 47: Führungshülse
- 48: Spalt

- 50: Ringnut
- 51: Querbohrung
- 52: Radbremsanschluß

- 55: Blende
- 56: Bypassleitung
- 57: Rückschlagventil
- 58: Drossel

- 60: Ringnut
- 61: Ringnut
- 62: Steg
- 63: Pumpenanschluß
- 64: Hauptzylinderanschluß
- 65: Steg

- 66: Direktleitung
- 67: Hochdruckspeicher
- 68: Sperrventil

- 70: erste Blende
- 71: zweite Blende
- 80: Haltekolben
- 81: Feder
- 82: Zwischenkammer
- 83: Kanalsystem

- 90: Sitzventil
- 91: Stößel
- 92: Kammer
- 93: Ventilkugel
- 94: Kerbe
- 96: Stößel

- 100: Rückschlagventil
- 101: Rückschlagventil

## Patentansprüche

1. Blockiergeschützte hydraulische Bremsanlage mit mindestens einem Radzylinder (3), einem pedalbetätigten Bremsdruckgeber (1) zur Druckbeaufschlagung der Radbremsen, einem Druckmodulator zur schlupfabhängigen Steuerung des Radbremsdruckes, einer Druckmittelquelle (7), wobei der Druckmodulator ein Einlaßventil (20) aufweist, das eine Verbindung des Druckmodulators zur Druckmittelquelle herstellt, und ein Auslaßventil (5) aufweist, das eine Verbindung des Modulators zu einem Druckmittelsammeler (6) herstellt, wobei das Einlaßventil durch eine Drossel oder ein Stromregelventil (20) dargestellt ist und dem Radzylinder (3) im Falle einer Blockierschutzregelung solange der Druck im Bremsdruckgeber (1) größer ist als im Radzylinder ausschließlich über das Auslaßventil (5) Druckmittel entnommen wird, dadurch **gekennzeichnet**, daß das Auslaßventil als Druckbegrenzungsventil (5) ausgebildet ist, das von einem Proportionalmagneten derart betätigt wird, daß ein Öffnungsdruck einstellbar ist, wobei der Ventilkörper (41) des Druckbegrenzungsventils (5) von einer Feder (45) belastet ist und der Proportionalmagnet so angeordnet ist, daß die erzeugte Magnetkraft der Federkraft entgegenwirkt, und daß die Geometrie des mit dem Ventilkörper (41) verbundenen Ankers (43) sowie des Polkerns (44) so ausgelegt ist, daß die auf den Anker wirkende Magnetkraft vom Hub des Ankers unabhängig ist.

## Claims

1. Anti-lock hydraulic brake system including at least one wheel cylinder (3), a pedal-operated braking pressure generator (1) for pressurization of the wheel brakes, a pressure modulator for the control of the wheel braking pressure in response to wheel slip, a pressure fluid source (7), the pressure modulator having an inlet valve (20) which establishes a connection between the pressure modulator and the pressure fluid source, and an outlet valve (5) which establishes a connection between the modulator and a pressure-fluid collecting means (6), wherein the inlet valve takes the shape of a throttle or a flow control valve (20), and wherein pressure fluid is removed from the wheel cylinder (3) exclusively by way of the outlet valve (5) during an anti-lock control operation as long as the pressure in the braking pressure generator (1) is in excess of the pressure in the wheel cylinder,
**characterized** in that the outlet valve is a pressure limiting valve (5) which is operated by a proportional magnet such as to permit adjustment of an opening pressure, wherein the valve member (41) of the pressure limiting valve (5) is loaded by a spring (45), and the proportional magnet is arranged such that the magnet force generated counteracts the spring force, and in that the geometry of the armature (43) connected to the valve member (41) and the geometry of the pole shoe (44) is so designed that the magnetic force acting on the armature is independent of the armature stroke.

## Revendications

1. Système de freinage hydraulique à régulation antiblocage des roues, comprenant au moins un cylindre de frein de roue (3), un générateur (1) de pression de freinage commandé par pédale, destiné à mettre sous pression les freins de roues, un modulateur de pression destiné à réguler la pression de freinage de roue en fonction du glissement, une source (7) de fluide sous pression, le modulateur de pression comportant une soupape d'admission (20) établissant une communication entre le modulateur de pression et la source de fluide sous pression, et une soupape d'échappement (5) établissant une communication entre le modulateur et un accumulateur (6) de fluide sous pression, la soupape d'admission étant représentée par un dispositif d'étranglement ou une soupape (20) de régulation du débit, et du fluide sous pression étant évacué du cylindre de frein de roue (3) uniquement à travers la soupape d'échappement (5), en cas de régulation antiblocage des roues, tant que la pression du générateur (1) de pression de freinage est supérieure à celle du cylindre de frein de roue,
caractérisé en ce que la soupape d'échappement est réalisée sous forme d'une soupape (5) de limitation de pression, qui est commandée par un électro-aimant proportionnel de manière à régler une pression d'ouverture, le corps de soupape (41) de la soupape (5) de limitation de pression étant rappelé par un ressort (45), et l'électro-aimant proportionnel étant disposé de manière telle que la force magnétique produite agisse à l'encontre de la force du ressort, et en ce que la géométrie de l'induit (43) relié au corps de soupape (41), ainsi que celle du noyau polaire (44) sont conçues de telle sorte que la force magnétique agissant sur l'induit soit indépendante de la course de l'induit.
